(19) Europäisches Patentamt
European Patent Office
Office européen des brevets

(11) **EP 0 898 401 B1**

(12) **EUROPÄISCHE PATENTSCHRIFT**

(45) Veröffentlichungstag und Bekanntmachung des Hinweises auf die Patenterteilung:
**15.06.2005 Patentblatt 2005/24**

(51) Int Cl.⁷: **H04L 25/03**, G10L 21/02, G11B 20/18

(21) Anmeldenummer: **98440173.7**

(22) Anmeldetag: **14.08.1998**

(54) **Verfahren zur Reduzierung von Störungen bei der Übertragung eines elektrischen Nachrichtensignals**

Method of interfering signal reduction during transmission of data signals

Procédé de réduction de signaux perturbateurs pendant la transmission de signaux numériques

(84) Benannte Vertragsstaaten:
**CH DE ES FI FR GB IT LI SE**

(30) Priorität: **22.08.1997 DE 19736517**

(43) Veröffentlichungstag der Anmeldung:
**24.02.1999 Patentblatt 1999/08**

(73) Patentinhaber: **ALCATEL**
**75008 Paris (FR)**

(72) Erfinder:
• **Walker, Michael**
  **73666 Baltmannsweiler (DE)**
• **Matt, Hans, Dr.**
  **71696 Remseck (DE)**
• **Trompf, Michael, Dr.**
  **71282 Hemmingen (DE)**

(74) Vertreter: **Rausch, Gabriele, Dr. et al**
**Alcatel**
**Intellectual Property Department Stuttgart**
**70430 Stuttgart (DE)**

(56) Entgegenhaltungen:
**DE-A- 2 916 127      DE-C- 4 427 351**
**US-A- 4 747 143      US-A- 5 586 192**

• **PATENT ABSTRACTS OF JAPAN vol. 008, no. 084 (E-239), 18. April 1984 (1984-04-18) & JP 59 005752 A (NIPPON VICTOR KK), 12. Januar 1984 (1984-01-12)**

**Beschreibung**

Die Erfindung betrifft ein Verfahren zur Reduzierung von Störungen bei der Übertragung eines elektrischen Nachrichtensignals, das vorzugsweise ein Sprachsignal aber auch ein Datensignal sein kann. Bei der Übertragung von Sprachsignalen über gestörte Kanäle werden den Sprachsignalen meist Störungen additiv überlagert. Diese Störungen können unterschiedliche Ursachen haben, beispielsweise Nebensprechen auf Leitungen, Einstreuungen von Starkstromübertragungsleitungen, Bitfehler oder Burstfehler bei digitalen Übertragungswegen oder Leitungsechos. Die von diesen Störungen hervorgerufenen Störsignale können so große Amplitudenwerte annehmen, daß die Sprachverständlichkeit der empfangenen Sprachsignale wesentlich verschlechtert wird.

Zur Reduzierung der Störanteile in einem gestört empfangenen Sprachsignal ist es allgemein bekannt, Bandsperren einzusetzen, die Störungen in einem bestimmten Frequenzbereich unterdrücken. Dabei ist es nachteilig, daß auch Frequenzanteile des Sprachsignals unterdrückt werden.

Wenn das Störsignal an einer großen Amplitude zu erkennen ist, die eine bestimmte Schwelle überschreitet, beispielsweise im HF- oder ZF-Demodulatorbereich eines Empfängers, kann das Ausgangssignal stumm geschaltet werden. Ein solches Verfahren wird beispielsweise bei UKW-Rundfunkempfängern und Amateurfunkgeräten eingesetzt.

Weiterhin ist bekannt, bei einem statistisch stationärem Geräusch das Geräusch in den Sprachpausen zu schätzen, zwischenzuspeichem und das Geräuschspektrum während der Sprache von dieser zu subtrahieren, vgl. W. Reich: Adaptive Systeme zur Reduktion von Umgebungsgeräuschen bei Sprachübertragung. Dissertation am Institut für Nachrichtentechnik, Universität Karlsruhe, 1985. Bei dem beschriebenen Verfahren wird die Zeitfunktion der Sprache mittels der Fast-Fourier-Transformation in ein Frequenzspektrum transformiert, das Frequenzspektrum wird bezüglich unerwünschter Geräusche analysiert und zur weiteren Verarbeitung in den Zeitbereich rücktransformiert. Durch die mehrfache Fast-Fourier-Transformation erfordert dieses Verfahren einen großen Rechenaufwand. Außerdem können Störer innerhalb des Sprachspektrums nicht erkannt werden.

Des weiteren offenbart die JP-A-59 005 752 ein Verfahren zum Erkennen und unterdrücken von Impulsstörungen, bei dem die Art der Störunterdrückung abhängig von der Zeitdauer der Störung gewählt wird.

Mit der Erfindung wird nun die Aufgabe gelöst, ein Verfahren zur Reduzierung von Störungen in einem Nachrichtensignal anzugeben, das im Vergleich zu dem bekannten Stand der Technik mit geringerem Rechenaufwand realisierbar ist und das nicht nur auf die Reduzierung stationärer oder quasistationärer Störungen beschränkt ist, sondern auch zur Reduzierung kurzer, instationärer Störungen geeignet ist.

Erfindungsgemäß wird diese Aufgabe durch das im ersten Patentanspruch beschriebene Verfahren gelöst. In den Unteransprüchen sind spezielle Realisierungsschritte des Verfahrens angegeben.

Das Wesen der Erfindung besteht darin, daß die Entstörmethode in Abhängigkeit vom Störsignaltyp ausgewählt wird. Dazu werden die Störungen eines empfangenen Nachrichtensignals hinsichtlich charakteristischer Merkmale im Zeitbereich analysiert und als Knack-, Krach-, Rumpel- oder Geräuschstörsignale klassifiziert, und ihr zeitliches Auftreten wird markiert. Abhängig vom Störsignaltyp wird eine Austastung des Störsignals und/oder eine Interpolation des Nachrichtensignals und/oder eine Subtraktion des Störsignals vom Nachrichtensignal und/oder eine Regeneration, das bedeutet ein Ersetzten des Störsignals durch ein Nutzsignal, vorgenommen.

Die Erfindung wird nunmehr an Hand eines Ausführungsbeispiels erläutert. In der dazugehörigen Zeichnung zeigen

Fig. 1 ein Blockschaltbild einer Schaltungsanordnung zur Beschreibung des erfindungsgemäßen Verfahrens,

Fig. 2 ein Blockschaltbild einer ersten Ausführungsvariante des Verfahrens,

Fig. 3 ein Blockschaltbild einer zweiten Ausführungsvariante des Verfahrens,

Fig. 4 ein Blockschaltbild einer dritten Ausführungsvariante des Verfahrens mit einer Schaltungsanordnung eines Merkmalsdetektors,

Fig. 5 ein Blockschaltbild einer Schaltungsanordnung für die Realisierung des Verfahrens,

Fig. 6 ein Blockschaltbild für die Beseitigung eines Impulsstörers durch lineare Interpolation,

Fig. 7 ein Blockschaltbild für die Beseitigung eines Rumpelstörers durch Störaustastung und

Fig. 8 ein Blockschaltbild für die Beseitigung eines Störers durch Regeneration.

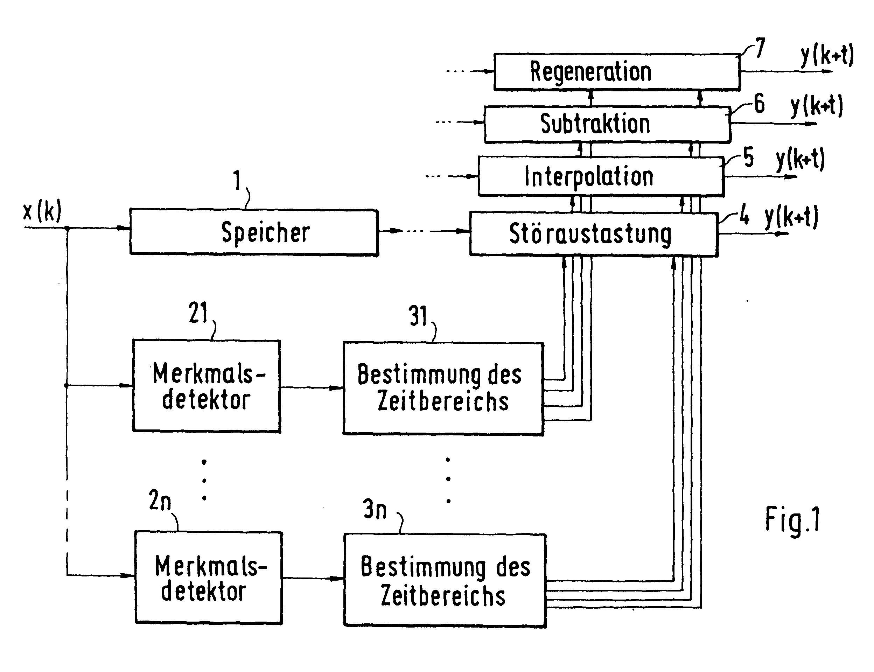

Gemäß Fig. 1 besteht die Schaltungsanordnung zur Durchführung des Verfahrens im wesentlichen aus einem Speicher 1, einer Gruppe von Merkmalsdetektoren 21,..., 2n, einem jeden Merkmalsdetektor zugeordneten Schaltungsblock 31, ..., 3n zur Bestimmung des Zeitbereichs sowie aus Baugruppen 4, 5, 6, 7 zur Störsignalreduktion, nämlich zur Störaustastung 4, zur Interpolation 5, zur Subtraktion 6 und zur Regeneration 7.

Das empfangene Signal x(k) wird im Zeitbereich analysiert. Dazu wird es gleichzeitig einem Speicher 1 mit einer definierten Speichertiefe τ und einer Gruppe von Merkmalsdetektoren 21, ..., 2n zugeführt. Mit der Gruppe von Merkmalsdetektoren 21, ..., 2n wird analysiert, welche im Zeitbereich typischen Störsignale, beispielsweise aufgrund einer Korrelationsmessung, mit welcher Amplitude und Phasenlage im aktuell empfangenen Zeitsignal enthalten ist. Typische Störsignale sind beispielsweise Knackstörer, Krachstörer und Rumpelgeräusche.

Statt mit einer Korrelationsmessung kann die Signalanalyse auch mit einem künstlichen neuronalen Netzwerk vorgenommen werden, das mit Hilfe eines Mustervergleichs aufgrund vorab gelernter Geräuschtypen die aktuell vorliegenden Störmuster identifiziert. Hierzu ist beispielsweise ein Multilayer Perzeptron Netzwerk geeignet, wie es in Rumelhart, Mc Clelland et al.: "Parallel Distributing Processing", Volume 1: Foundations, MIT Press, 1986 beschrieben ist.

Aufgrund des Ergebnisses der Analyse des empfangenen Signals x(k) wird der aktuelle Zeitbereich, der eine der detektierten Störmuster mit hoher Wahrscheinlichkeit enthält, genau markiert, so daß nunmehr das detektierte Störsignal und das störungsbehaftete empfangene Signal x(k) je nach Störmuster miteinander verknüpft werden können und ein im wesentlichen störungsfreies Ausgangssignal y(k+t) entsteht.

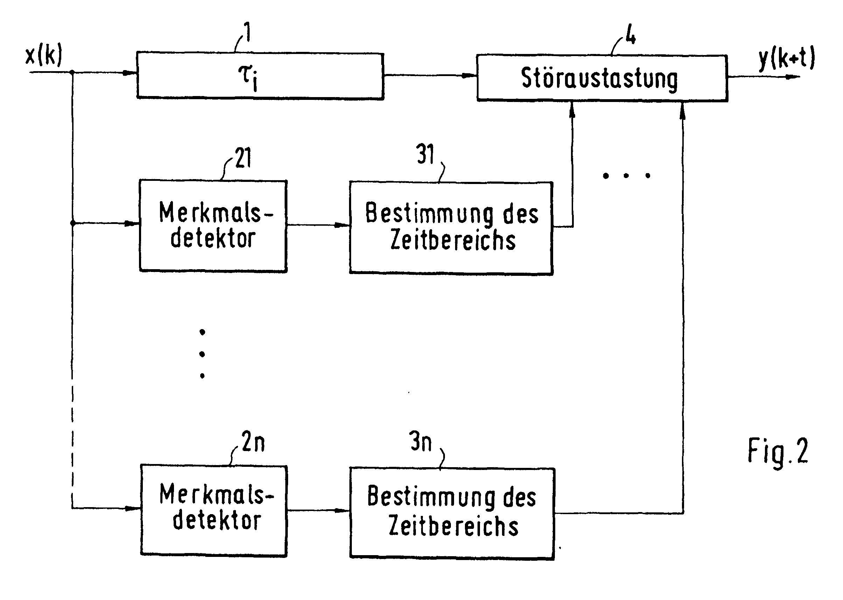

Figur 2 zeigt eine erste Ausführungsvariante des Verfahrens. Nachdem Merkmal und Zeitbereich bestimmt worden sind, wird das empfangene, störungsbehaftete und gespeicherte Signal x(k) aus dem Speicher 1 ausgelesen und der gestörte Bereich wird durch ein Signal "Null" ersetzt, der Störer wird aus dem Signal herausgeschnitten. Eine solche Störaustastung 4 kann bei Knackstörern bei der Sprachübertragung mit Vorteil angewendet werden, da kurze Unterbrechungen der Sprachübertragung durch die physiologischen Eigenschaften des menschlichen Ohres überdeckt werden und somit nicht störend wirken.

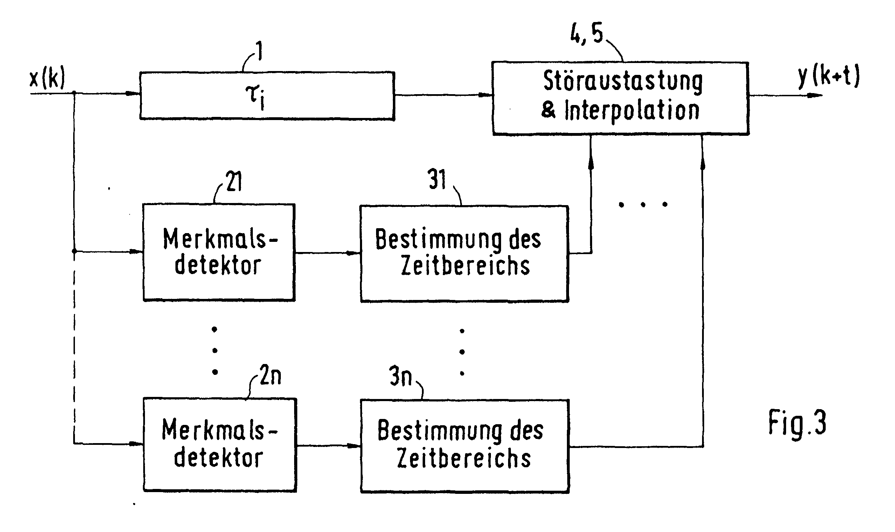

Figur 3 zeigt eine zweite Auführungsvariante des Verfahrens. Der gestörte Zeitbereich wird wie bei Figur 2 beschrieben aus dem störungsbehafteten empfangenen Signal x(k) "herausgeschnitten" und durch eine lineare Interpolation zwischen den an den Grenzen des Zeitbereichs auftretenden Funktionswerten ersetzt. Die Störaustastung 4 und Interpolation 5 wird angewendet, wenn beispielsweise bei der blockweisen Übertragung des Nachrichtensignals die Störaustastung 4 sofort eine Fehlermeldung. auslösen würde. Die Kombination von Störaustastung 4 und Interpolation 5 kann besonders wirkungsvoll auch bei der Sprachübertragung eingesetzt werden, wenn bei der Interpolation die Sprachbandgrundfrequenz verwendet wird.

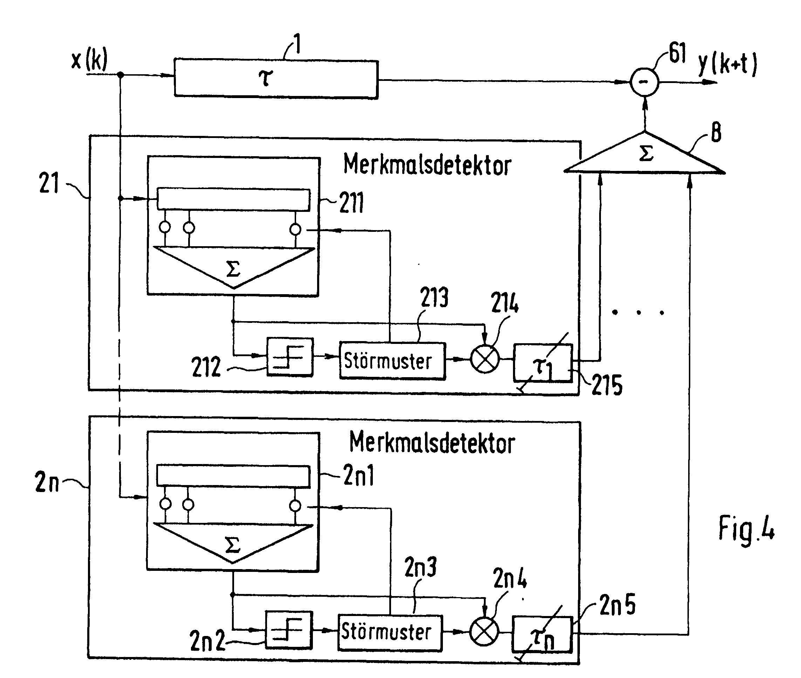

In Figur 4 ist eine dritte Ausführungsvariante des Verfahrens und eine Realisierungsmöglichkeit der Merkmalsdetektoren 21... 2n dargestellt. Ein Merkmalsdetektor 21 besteht im wesentlichen aus einem FIR-Filter 211, einem Schwellwertschalter 212, einem Störmustergenerator 213, einem Multiplizierglied 214 und einem Verzögerungsglied 215. Das störungsbehaftete Signal x(k) wird gleichzeitig dem Speicher 1 und den FIR-Filtern 211 ...2n1 zugeführt. Jedes FIR-Filter 211... 2n1 wird über den Störmustergenerator 213 auf einen bestimmten Störmustertyp eingestellt. Aus dem empfangenen Signal x(k) und dem Störmustertyp wird von dem FIR-Filter 211...2n1 jeweils ein Korrelationsergebnis geliefert. Überschreitet das Störsignal eine von den Schwellwertschaltern 212...2n2 definierte Schwelle, so wird das Störsignal in den Multipliziergliedern 214...2n4 mit dem Korrelationsergebnis bewertet, anschließend mit den Verzögerungsgliedern 215...2n5 phasensichtig eingestellt und über eine Summierschaltung 8 einem Substrahierglied 61 zugeführt. Mit Hilfe des Subtrahiergliedes 61 werden die unterschiedlichen Störungen mit der entsprechenden Amplitude und der richtigen Zeitlage und Phasenlage von dem in dem Speicher 1 gespeicherten, störungsbehafteten, empfangenen Signal x(k) subtrahiert.

Es ist auch möglich, einen Merkmalsdetektor 21...2n als künstliches neuronales Netzwerk zur Störtypanalyse und zur Extraktion typischer Störungsmerkmale zu realisieren. Hierzu geeignete künstliche neuronale Netzwerke sind beispielsweise sogenannte Self-Organizing Feature Maps, wie sie beschrieben sind von Kohonen T.: Self Organization and Associative Memory. Springer Series in Information Sciences. 3rd Edition, Seiten 119-155.

Weiterhin ist es möglich, die Identifizierung des vorliegenden Störtyps durch Mustervergleich mit in einer Datenbank abgelegten prototypischen Vertretern unterschiedlicher Störtypen vorzunehmen, die aus anderen Verarbeitungsebenen, beispielsweise aus definierten Sprachcodierstandards, als der des Zeitbereichs stammen. Die typischen Störsignalparameter werden dann vorab durch geeignete Signalverarbeitungsverfahren berechnet. Die prototypischen Vertreter der Störtypdatenbank können zur Begrenzung des Speicher- und Rechenaufwandes duch Clusteringverfahren gewonnen werden, bei dem beispielsweise aus einer bestimmten Anzahl unterschiedlicher Störungen ein Prototyp eines Störers ermittelt wird, so daß somit unterschiedliche Ausprägungen eines Störtyps durch lediglich einen Prototypen in der Datenbank repräsentiert werden.

Die Störtypdatenbank kann vorteilhafterweise während des Betriebes automatisch an auftretende Störungen adaptiert werden, indem in den Sprachpausen durch fortlaufenden Vergleich des Pausensignals mit den in der Störtypdatenbank gespeicherten Prototypen der Inhalt der Datenbank an die aktuellen Störungsverhältnisse adaptiert wird. Dabei kann die Adaption des dem aktuellen Störtyp ähnlichen Prototypen beispielsweise durch Mittelungsverfahren an den aktuell vorliegenden Störtyp erfolgen, oder es können neue Einträge in die Störtypdatenbank aufgenommen werden, oder es kann die Prototypenadaption mit Neueinträgen kombiniert werden.

Durch Austausch der Einträge in die Störtypendatenbank kann das Entstörungsverfahren herstellerseitig an bestimmte Kundenwünsche angepaßt und für verschiedene Einsatzumgebungen und Geräteparameter, wie beispielsweise Bandbreite, Dynamik, Codierung, Modulationsart, Sendefrequenz, konfiguriert werden.

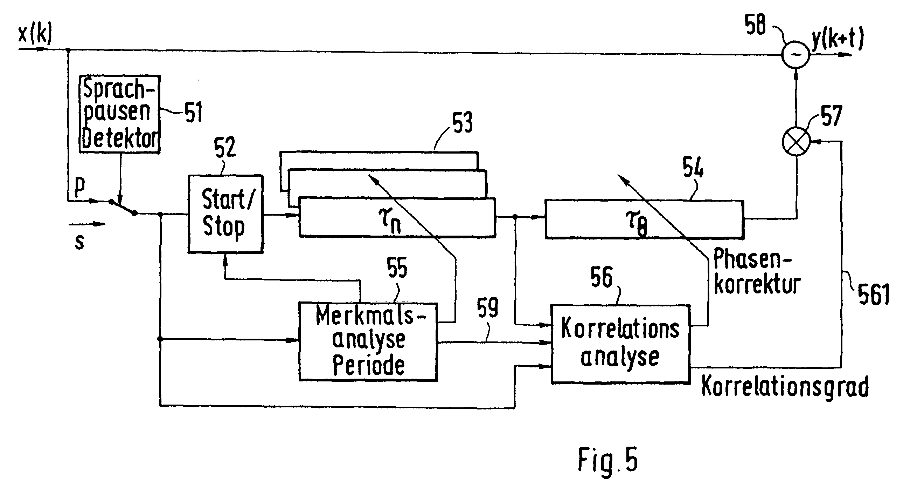

Figur 5 zeigt ein Blockschaltbild einer Schaltungsanordnung des Verfahrensablaufs bei der Reduzierung stationärer Störer im Sprachsignal. Gemäß Figur 5 besteht die Schaltungsanordnung im wesentlichen aus einem Sprachpausendetektor 51, einer Start-Stop-Schaltung 52, einem ersten Speicher 53, einem zweiten Speicher 54, einem Merkmals- und Periodendetektor 55, einem Korrelationsanalysator 56, einem Multiplizierglied 57 sowie einem Subtrahierglied 58.

Stationäre Störer sind durch folgende Merkmale definiert:

- Die Abstände zwischen den Nulldurchgängen des Störsignal wiederholen sich periodisch.
- Die Polarität und der Wert des Störsignals ändern sich von Periode zu Periode.

Ziel des Verfahren ist es, einen stationären Störer zu ermitteln und ihn dann vom Sprachsignal zu subtrahieren. Dazu wird zunächst mit dem Sprachpausendetektor 51 eine Sprachpause festgestellt, um während der Sprachpause eine Merkmals- und Periodenanalyse mit dem entsprechenden Detektor 55 vorzunehmen. Die Störer werden in den ersten Speicher 53 nur so lange aufgezeichnet, bis die Periode der Störer erkannt ist und über die Start-Stop-Schaltung 52 der Speichervorgang beendet wird. Der Merkmalsund Periodendetektor 55 gibt dann über eine Leitung 59 ein Zeitfenster für den Korrelationsanalysator 56 frei, so daß eine Korrelationsanalyse zwischen gespeichertem und aktuellem Störer durchgeführt wird und der im ersten Speicher 53 gespeicherten Störer über den zweiten Speicher 54 phasenrichtig ausgelesen, mit dem Korrelationsgrad 561 im Multiplizierglied 57 bewertet und schließlich im Subtrahierglied 58 von dem empfangenen Sprachsignal x(k) subtrahiert wird, so daß am Ausgang des Subtrahiergliedes 58 ein im wesentlichen störfreies Sprachsignal y(k+t) vorliegt.

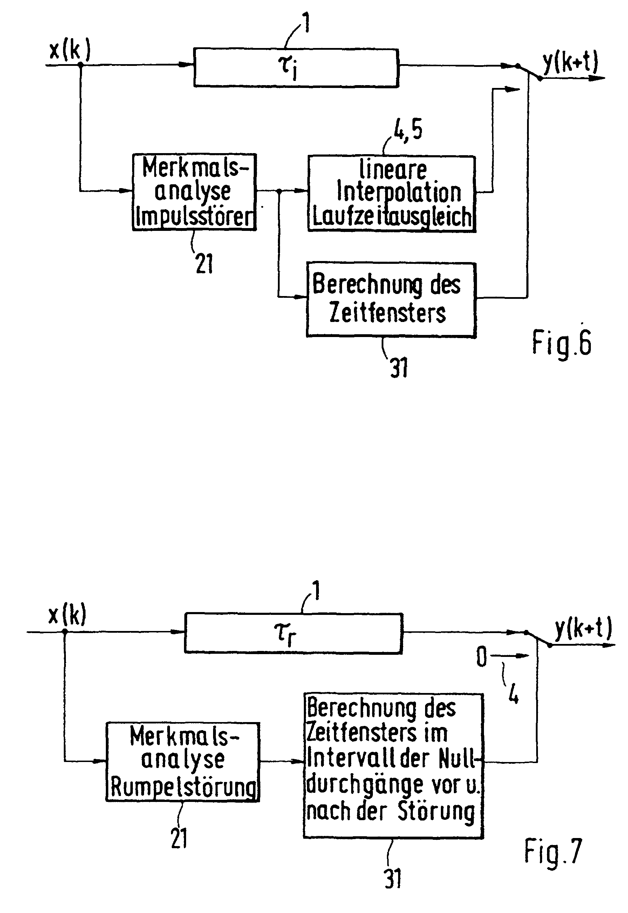

In Übereinstimmung mit Figur 3 zeigt Figur 6 ein Blockschaltbild für die Reduzierung eines Impulsstörers durch lineare Interpolation. Nach der Bestimmung des Zeitbereichs 31 des Störers wird der Impulsstörer über die Störaustastung 4 beseitigt und durch eine lineare Interpolation 5 ersetzt, so daß ein im wesentlichen störfreies Sprachsignal y(k+t) erzielt wird.

Beispiel für die Merkmale des Impulsstörers:

- Zeitdauer des Störers

$$ts < 2ms$$

- Pausenzeit nach Störimpuls

$$tp \geq ts$$

- Der Mittelwert des gestörten Sprachsignals x(k) über eine sehr kurze Zeit vsam (very short average magnitude) ist größer als der Kurzzeitmittelwert sam.

$$vsam \{x(k)\} > sam\{x(k)\}$$

- Der Betrag des aktuellen Anstieg

$$\left|\frac{dx}{dt}\right|$$

des gestörten Sprachsignals ist größer als der Anstiegs des Kurzzeitmittelwerts sam

$$\left|\frac{dx}{dt}\right|$$

$$\left|\frac{dx}{dt}\right| > sam \left|\frac{dx}{dt}\right|$$

- Speichertiefe des Speichers 1 $\tau i \geq tp + ts$

In Übereinstimmung mit Figur 2 zeigt Figur 7 ein Blockschaltbild für die Störaustastung eines Rumpelstörers. Nach der Merkmalsanalyse mit dem Merkmalsdetektor 21 und der Bestimmung des Zeitbereichs 31 wird bei erkanntem Rumpelstörer dieser durch eine Störaustastung 4 aus dem Sprachsignal x(k) beseitigt.

Beispiel für die Merkmale des Rumpelstörers:

- Zeitdauer des Störers:

$$2\ ms < ts < 20\ ms$$

- Pausenzeit nach Störburst:

$$tp \geq ts$$

- Der Kurzzeitmittelwert sam des gestörten Sprachsignals x(k) ist größer als der Langzeitmittelwert lam.

$$sam \{x(k)\} > lam \{x(k)\}$$

- Der Betrag des aktuellen Anstiegs

$$\left|\frac{dx}{dt}\right|$$

des gestörten Sprachsignals ist größer als der Betrog des Anstiegs des Kurzzeitmittelwerts sam

$$\left|\frac{dx}{dt}\right|$$

$$\left|\frac{dx}{dt}\right| > \text{sam} \left|\frac{dx}{dt}\right|$$

- Speichertiefe des Speichers 1 $\tau_r \geq$ tp +ts

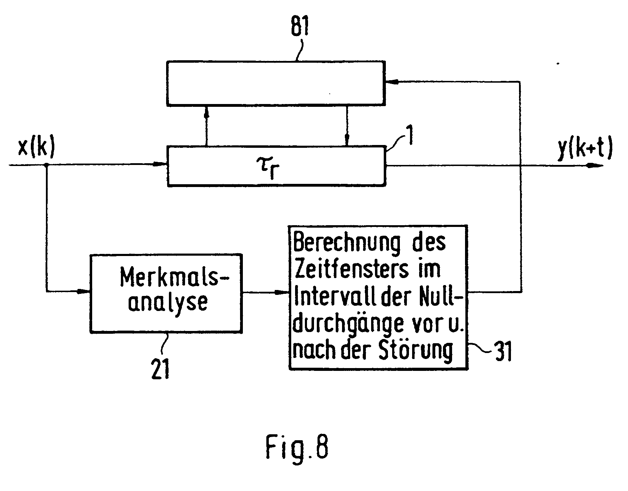

Figur 8 zeigt die Möglichkeit, das erkannte Störsignal durch ein Nutzsignal zu ersetzen. Dazu wird nach der Merkmalsanalyse mit dem Merkmalsdetektor 21 und der Bestimmung des Zeitfensters des Störsignals 31 die Periode des Nutzsignals x(k) durch einen Periodendetektor 81 festgestellt, so daß nach erkannter Periode das Störsignal ausgetastet und durch das entsprechende Nutzsignal ersetzt werden kann.

Mit dem erfindungsgemäßen Verfahren wird eine wirkungsvolle Reduzierung sowohl von stationären als auch instationären Störungen in Rechenaufwand im Vergleich zur Spektralsubtraktion im Zeitbereich wesentlich geringer. Vorteilhafterweise können in Abhängigkeit von den charakteristischen Merkmalen der Störsignale die Entstörmethoden ausgewählt und bedarfsweise kombiniert werden. So ist das Verfahren überall dort mit Vorteil einsetzbar, wo starke Hintergrundgeräusche auftreten, wie beispielsweise beim Betrieb von Fernsprechendgeräten aller Art mit Freisprecheinrichtungen bei unterschiedlichen Umgebungsbedingungen, wie sie beispielsweise auf Bahnhöfen, Flughäfen und auf Messegeländen auftreten.

**Patentansprüche**

1. Verfahren zur Reduzierung von Störungen bei der Übertragung eines elektrischen Nachrichtensignals (x(k)), **gekennzeichnet durch** folgende Verfahrensschritte:

   - Das als Zeitfunktion störbehaftet empfangene Nachrichtensignal (x(k)) wird sowohl mindestens einem Speicher (1) als auch mindestens einem Merkmalsdetektor (21...2n) zugeführt,
   - das Nachrichtensignal (x(k)) wird in dem Speicher (1) gespeichert und in dem Merkmalsdetektor (21...2n) bezüglich charakteristischer Störsignalmerkmale analysiert,
   - von dem Merkmalsdetektor (21...2n) wird ein Störsignaltyp erkannt, und danach wird der Zeitbereich (31...3n) bestimmt, in dem das Störsignal auftritt,
   - das gespeicherte Signal wird aus dem Speicher (1) ausgelesen, und im Zeitbereich des Störsignals wird in Abhängigkeit vom Störsignaltyp eine Entstörmethode ausgewählt, mit der das gestörte Signal und der erkannte Störsignaltyp derart verarbeitet werden, daß ein störungsfreies Nachrichtensignal (y(k+t)) bereitgestellt wird.

2. Verfahren nach Anspruch 1, **dadurch gekennzeichnet, daß** in Abhängigkeit vom Störsignaltyp eine Störaustastung (4) des Störsignals und/oder eine Interpolation (5) des Nachrichtensignals (x(k)) und/oder eine Subtraktion (6) des Störsignals von störbehafteten Nachrichtensignal (x(k)) und/oder eine Regeneration (7) des Nachrichtensignals (x(k)) nach einer Störaustastung (4) vorgenommen wird.

3. Verfahren nach Anspruch 1 und 2, **dadurch gekennzeichnet** et, daß bei einem stationären Störsignal in Abhängigkeit von dem Korrelationsgrad zwischen aktuellem Störsignal und gespeichertem Störsignal eine Subtraktion des Störsignals vom gestörten Signal (x(k)) erfolgt.

4. Verfahren nach Anspruch 1 und 2, **dadurch gekennzeichnet, daß** bei einem dem Nachrichtensignal (x(k)) überlagerten Impulsstörer dieser Impulsstörer ausgetastet und durch ein mittels Interpolation des Nachrichtensignals (x(k)) erzeugtes Signal ersetzt wird.

5. Verfahren nach Anspruch 1 und 2, **dadurch gekennzeichnet, daß** bei einem dem Nachrichtensignal (x(k)) überlagerten Rumpelstörer dieser Rumpelstörer ausgetastet oder durch einen Zeitbereich des Nachrichtensignals (x(k)) ersetzt wird.

6. Verfahren nach Anspruch 1, **dadurch gekennzeichnet, daß** das störbehaftet empfangene Signal (x(k)) einer Datenbank zugeführt wird, in der prototypische Vertreter von Störsignalen gespeichert sind und somit durch Mustervergleich des prototypischen Vertreters des Störsignals mit dem aktuell vorliegenden Störsignals der Störsignaltyp ermittelt wird.

**Claims**

1. Method of reducing interference in the transmission of an electrical telecommunication signal (x(k)), **characterized by** the following method steps:

   - the telecommunication signal (x(k)), which is received as a time function and interference-affected, is fed to both at least one memory (1) and at least one feature detector (21 ... 2n),

- the telecommunication signal (x(k)) is stored in the memory (1) and analysed in the feature detector (21 ... 2n) for characteristic interference signal features,

- the feature detector (21 ... 2n) detects an interference signal type, and then the time domain (31 ... 3n) in which the interference signal occurs is determined,

- the stored signal is read out of the memory (1), and in the time domain of the interference signal, depending on the interference signal type, an interference suppression method with which the interference-affected signal and the detected interference signal type are processed in such a way that an interference-free telecommunication signal (y(k+t)) is provided, is selected.

2. Method according to Claim 1,
**characterized in that** depending on the interference signal type, the interference signal is blanked (4), and/or the telecommunication signal (x(k)) is interpolated (5), and/or the interference signal is subtracted from the interference-affected telecommunication signal (x(k)) (6), and/or the telecommunication signal (x(k)) is regenerated (7) after the interference is blanked (4).

3. Method according to Claims 1 and 2, **characterized in that** in the case of a stationary interference signal, depending on the degree of correlation between the current interference signal and the stored interference signal, the interference signal is subtracted from the interference-affected signal x(k).

4. Method according to Claims 1 and 2, **characterized in that** in the case of a pulse interference which is overlaid over the telecommunication signal (x(k)), this pulse interference is blanked and replaced with a signal which is generated by interpolation of the telecommunication signal (x(k)).

5. Method according to Claims 1 and 2, **characterized in that** in the case of a rumble interference which is overlaid over the telecommunication signal (x(k)), this rumble interference is blanked or replaced with a time domain of the telecommunication signal (x(k)).

6. Method according to Claim 1, **characterized in that** the interference-affected received signal (x(k)) is fed to a database, in which prototypical representatives of interference signals are stored, and thus the interference signal type is determined by pattern comparison of the prototypical representative of the interference signal with the currently present interference signal.

## Revendications

1. Procédé de réduction des perturbations lors de la transmission d'un signal d'information électrique (x(k)), **caractérisé par** les étapes suivantes :

- Le signal d'information (x(k)) reçu perturbé sous la forme d'une fonction temporelle est acheminé à la fois à au moins une mémoire (1) et à au moins un détecteur de propriétés (21 ... 2n),

- Le signal d'information (x(k)) est enregistré dans la mémoire (1) et analysé dans le détecteur de propriétés (21 ... 2n) pour y détecter les propriétés caractéristiques du signal parasite,

- Le détecteur de propriétés (21 ... 2n) détecte un type de signal parasite et on détermine ensuite la plage de temps (31 ... 3n) dans laquelle se produit le signal parasite,

- le signal enregistré est chargé depuis la mémoire (1) et, dans la plage de temps du signal parasite, une première méthode d'antiparasitage est choisie en fonction du type de signal parasite avec laquelle le signal perturbé et le type de signal parasite détecté sont traités de manière à délivrer un signal d'information exempt de parasites (y(k+t)).

2. Procédé selon la revendication 1, **caractérisé en ce que** suivant le type de signal parasite, on effectue un effacement du parasite (4) du signal parasite et/ou une interpolation (5) du signal d'information (x(k)) et/ou une soustraction (6) du signal parasite du signal d'information perturbé (x(k)) et/ou une régénération (7) du signal d'information (x(k)) après un effacement du parasite (4).

3. Procédé selon la revendication 1 et 2, **caractérisé en ce qu'**en présence d'un signal parasite stationnaire, on effectue une soustraction du signal parasite du signal perturbé (x(k)) en fonction du degré de corrélation entre le signal parasite actuel et le signal parasite enregistré.

4. Procédé selon la revendication 1 et 2, **caractérisé en ce qu'**en présence d'un parasite impulsionnel superposé au signal d'information (x(k)), ce parasite impulsionnel est effacé et remplacé par un signal produit par interpolation du signal d'information (x(k)).

5. Procédé selon la revendication 1 et 2, **caractérisé en ce qu'**en présence d'un ronronnement parasite supcrposé au signal d'information (x(k)), ce ronronnement parasite est effacé ou remplacé par une pla-

ference signal.

ge de temps du signal d'information (x(k)).

6.  Procédé selon la revendication 1, **caractérisé en ce que** le signal reçu perturbé (x(k)) est acheminé à une base de données dans laquelle sont enregistrés des représentants prototypiques de signaux parasites et le type de signal parasite est ainsi déterminé par une comparaison de modèles entre le représentant prototypique du signal parasite et le signal parasite actuellement présent.

Fig.1

x(k)

1 — Speicher

21 — Merkmals-detektor
31 — Bestimmung des Zeitbereichs

2n — Merkmals-detektor
3n — Bestimmung des Zeitbereichs

4 — Störaustastung — y(k+t)
5 — Interpolation — y(k+t)
6 — Subtraktion — y(k+t)
7 — Regeneration — y(k+t)

Fig.2

EP 0 898 401 B1

x(k)

$\tau_i$

1

Störaustastung & Interpolation

4,5

y(k+t)

Merkmals-detektor

21

Bestimmung des Zeitbereichs

31

Merkmals-detektor

2n

Bestimmung des Zeitbereichs

3n

Fig.3

x(k)

$\tau$ — 1

y(k+t)

61

Merkmalsdetektor

21

211

$\Sigma$

213  214

212  Störmuster  $\tau_1$  215

$\Sigma$  8

Merkmalsdetektor

2n

2n1

$\Sigma$

2n3  2n4  2n5

2n2  Störmuster  $\tau_n$

Fig.4

EP 0 898 401 B1

Fig. 5

EP 0 898 401 B1

1

x(k) → τ_i → y(k+t)

Merkmalsanalyse
Impulsstörer
21

4,5
lineare
Interpolation
Laufzeitausgleich

Berechnung des
Zeitfensters
31

Fig.6

1

x(k) → τ_r → y(k+t)

0

4

Merkmalsanalyse
Rumpelstörung
21

Berechnung des
Zeitfensters im
Intervall der Null-
durchgänge vor u.
nach der Störung
31

Fig.7

81

x(k) → $\tau_r$ → y(k+t)

1

Merkmals-analyse

21

Berechnung des Zeitfensters im Intervall der Null-durchgänge vor u. nach der Störung

31

Fig.8